# EUROPEAN PATENT APPLICATION

(11) **EP 4 421 256 A1**
(43) Date of publication of application: **28.08.2024**
(21) Application number: 24159190.8
(22) Date of filing: 22.02.2024
(51) Int. Cl.: E04B 1/16, F16B 21/07, F16B 37/02, E04B 2/74, F16B 2/22, F16B 5/06

(54) **HOLDER FOR CONNECTING ELEMENT FOR EXHIBITION STAND PROFILE**

(30) Priority: 23.02.2023 BE 202305135
(71) Applicant: Aluvision N.V., 8500 Kortrijk (BE)
(72) Inventor: Deleu, Dirk, 9800 Deinze (BE)
(74) Representative: Arnold & Siedsma

(57) **Abstract**

A holder (300) for use in an assembly with an exhibition stand profile and a connecting element, wherein the holder comprises a holder element (310) and a coupling element (320), wherein the coupling element (320) is configured to couple the holder to the exhibition stand profile (100) and wherein the holder element (310) is provided to hold a connecting element (200), which is configured to connect two exhibition stand profiles to each other, so that the connecting element is transportable together with the exhibition stand profile.

## Description

### Field of the invention

The invention relates to an assembly of an exhibition stand profile, a connecting element and a holder for the connecting element. The invention further relates to a holder for the connecting element.

### Background

To make stands, for instance promotional stands, as used at trade fairs, exhibitions, events and so on use is often made of frames, in this case also referred to as exhibition stand elements, which are mutually connected by means of connecting elements.

Many connecting elements used for connecting the exhibition stand elements are locking pins or bolts which are arranged through passages in the profiles provided for this purpose, and as such form the connection between mutually abutting profiles of the exhibition stand elements.

Time is extremely limited during construction of stands. Construction must be quick, considering the strict deadlines. Transport and storage of the connecting elements is however inconvenient and time-consuming. The connecting elements are thus typically stored in bulk in a container from which an installer can grab and arrange the connecting element when a connecting element is needed. Transportation of the connecting elements is labour-intensive, time-consuming and inconvenient. The connecting element can then be assembled and then, after the trade show has ended, be disassembled again. Disassembly is also done under time pressure. Parts of the connecting elements are often lost during disassembly, resulting in time being lost again or even more time being lost in a subsequent construction.

### Summary of the invention

Embodiments of the invention have the object of obviating the above stated problems.

According to a first aspect, an assembly of an exhibition stand profile, a connecting element and a holder is provided. The exhibition stand profile is a profile configured for construction of an exhibition stand frame and having a first side wall, a second side wall and a third side wall, wherein the first side wall and the second side wall lie opposite each other, and the third side wall forms a connection between the first side wall and the second side wall, wherein the exhibition stand profile is provided with a first passage extending through the exhibition stand profile from a first opening in the first side wall to a second opening in the second side wall. The connecting element is configured to, in a connecting position, be arranged through the passage of the exhibition stand profile and a further exhibition stand profile for the purpose of mutually connecting the exhibition stand profile and the further exhibition stand profile when the exhibition stand profile and the further exhibition stand profile are placed with respectively one of their first and second side walls against each other. A connecting element can also be provided which connects the exhibition stand profile to an external exhibition stand profile, such as an LED tile. The holder comprises a holder element and a coupling element, wherein the coupling element is configured to couple the holder to the exhibition stand profile and wherein the holder element is provided to hold the connecting element so that the connecting element is transportable together with the exhibition stand profile. By providing a holder which is connectable to an exhibition stand frame on one side and is configured to hold the connecting element on the other a storage space is always available for the connecting element during construction and dismantling of the stand, and in this way the connecting element will not be lost. The connecting element is further indirectly connected to the exhibition stand profile so that a connecting element is always immediately available during assembly. This considerably reduces a distance travelled by the installer between the exhibition stand profile and the connecting elements, since the connecting element is always transported along with the exhibition stand profile. It will be apparent that more than one connecting element can be mounted on an exhibition stand profile.

Further advantages and effects are elucidated in the figure description below.

The holder is more preferably couplable to the exhibition stand profile in removable manner.

Preferably, the holder is couplable to the exhibition stand profile via one of the first opening and the second opening and the coupling element comprises a first tongue which is configured to extend in the coupled state through the first opening or the second opening and to extend on an inner side of the first side wall or second side wall in order to couple the holder to the exhibition stand profile.

More preferably, the first tongue is a resilient tongue and the first tongue comprises a guide part which is configured to make the first tongue spring inward during arranging of the holder.

The holder preferably further comprises a second tongue, which second tongue is arranged on a side of the holder lying opposite the first tongue and is configured to extend through at least one of the first opening, the second opening and a further opening and to extend on an inner side of the first side wall or second side wall.

A distance between the first tongue and the second tongue more preferably corresponds with a diameter of the first opening or the second opening.

The exhibition stand profile is preferably provided with a plurality of passages extending through the exhibition stand profile from respectively a first opening in the first side wall to a second opening in the second side wall, wherein the plurality of passages are provided at a centre-to-centre distance from each other.

A distance between the first tongue and the second tongue preferably corresponds with a sum of the centre-to-centre distance and a diameter of one of the first and the second opening.

The first tongue and/or the second tongue are preferably formed to be able to spring inward and outward around an axis A which lies substantially parallel to the first or second side wall. The first tongue and/or the second tongue comprises here more preferably an actuator element which is provided at an outer end of the tongue and, in the coupled state, is located on an outer side of the first side wall or the second side wall so that, by moving the actuator element, the first tongue and/or the second tongue can spring inward in order to enable the holder to be uncoupled.

The coupling element preferably comprises a first leg and a second leg, which are configured to surround the connecting element at least partially in order to hold the connecting element.

According to a further aspect, a holder for use in an assembly with an exhibition stand profile and a connecting element is provided, preferably the assembly as described above. The holder comprises a holder element and a coupling element, wherein the coupling element is configured to couple the holder to the exhibition stand profile and wherein the holder element is provided to hold a connecting element configured to connect two exhibition stand profiles to each other so that the connecting element is transportable together with the exhibition stand profile.

The holder is more preferably couplable to the exhibition stand profile in removable manner.

Preferably, the holder is couplable to the exhibition stand profile via one of a first opening and a second opening and the coupling element comprises a first tongue configured to extend in the coupled state through the first opening or the second opening and to extend on an inner side of a first side wall or second side wall of the exhibition stand profile in order to couple the holder to the exhibition stand profile.

More preferably, the first tongue is a resilient tongue and the first tongue comprises a guide part which is configured to make the first tongue spring inward during arranging of the holder.

The holder preferably further comprises a second tongue, which second tongue is arranged on a side of the holder lying opposite the first tongue and is configured to extend through at least one of the first opening, the second opening and a further opening and to extend on an inner side of the first side wall or second side wall.

A distance between the first tongue and the second tongue more preferably corresponds with a diameter of the first opening or the second opening.

The exhibition stand profile is preferably provided with a plurality of passages extending through the exhibition stand profile from respectively a first opening in the first side wall to a second opening in the second side wall, wherein the plurality of passages are provided at a centre-to-centre distance from each other.

A distance between the first tongue and the second tongue more preferably corresponds with a sum of a centre-to-centre distance between two openings of the exhibition stand profile and a diameter of one of the first and the second opening.

The first tongue and/or the second tongue are preferably formed to be able to spring inward and outward around an axis A which lies substantially parallel to the first or second side wall.

More preferably, the first tongue and/or the second tongue comprises an actuator element which is provided at an outer end of the tongue and, in the coupled state, is located on an outer side of the first side wall or the second side wall so that, by moving the actuator element, the first tongue and/or the second tongue can spring inward in order to enable the holder to be uncoupled.

The coupling element preferably comprises a first leg and a second leg, which are configured to surround the connecting element at least partially in order to hold the connecting element.

### Brief description of the figures

The above stated and other advantageous features and objects of the invention will become more apparent, and the invention better understood, on the basis of the following detailed description when read in combination with the accompanying drawings, in which:
Figure 1 is a top view of a cross-section of an assembly according to an exemplary embodiment;
Figure 2 is a side view of a cross-section of an assembly according to an exemplary embodiment;
Figure 3 is a perspective view of two exhibition stand profiles connected by a connecting element.

### Detailed embodiments

The following detailed description relates to determined specific embodiments. The teaching hereof can however be applied in different ways. The same or similar elements are designated in the drawings with the same reference numerals.

The present invention will be described with reference to specific embodiments. The invention is however not limited thereto, but solely by the claims.

As used here, the singular forms "a" and "the" comprise both the singular and plural references, unless clearly indicated otherwise by the context.

The terms "comprising", "comprises" and "composed of" as used here are synonymous with "including". The terms "comprising", "comprises" and "composed of" when referring to stated components, elements or method steps also comprise embodiments which "consist of' the components, elements or method steps.

The terms first, second, third and so on are further used in the description and in the claims to distinguish between similar elements and not necessarily to describe a sequential or chronological order, unless this is specified. It will be apparent that the thus used terms are mutually interchangeable under appropriate circumstances and that the embodiments of the invention described here can operate in an order other than described or illustrated here.

Reference in this specification to "one embodiment", "an embodiment", "some aspects", "an aspect" or "one aspect" means that a determined feature, structure or characteristic described with reference to the embodiment or aspect is included in at least one embodiment of the present invention. The manifestations of the sentences "in one embodiment", "in an embodiment", "some aspects", "an aspect" or "one aspect" in different places in this specification thus do not necessarily all refer to the same embodiment or aspects. As will be apparent to a skilled person in this field, the specific features, structures or characteristics can further be combined in any suitable manner in one or more embodiments or aspects. Although some embodiments or aspects described here comprise some but no other features which are included in other embodiments or aspects, combinations of features of different embodiments or aspects are further intended to fall within the context of the invention and to form different embodiments or aspects, as would be apparent to the skilled person. In the appended claims all features of the claimed embodiments or aspects can for instance be used in any combination.

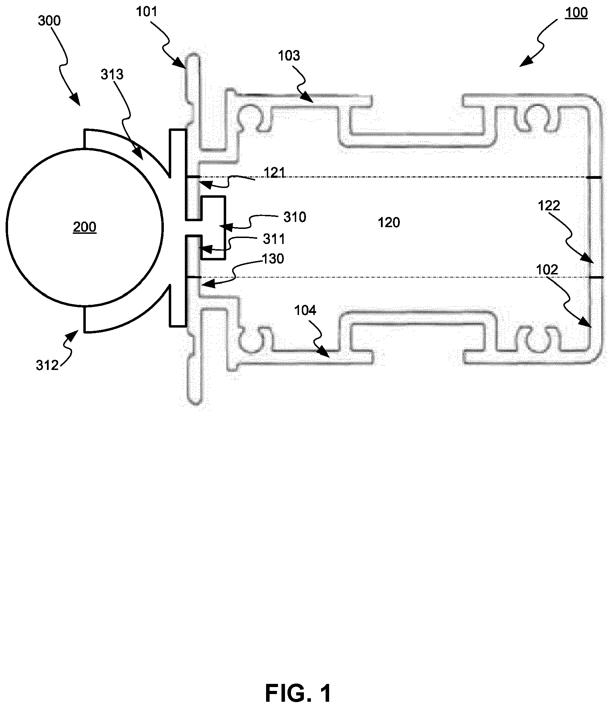

Figure 1 shows a top view of a cross-section of an assembly according to an exemplary embodiment. The assembly comprises an exhibition stand profile 100, a connecting element 200 and a holder 300.

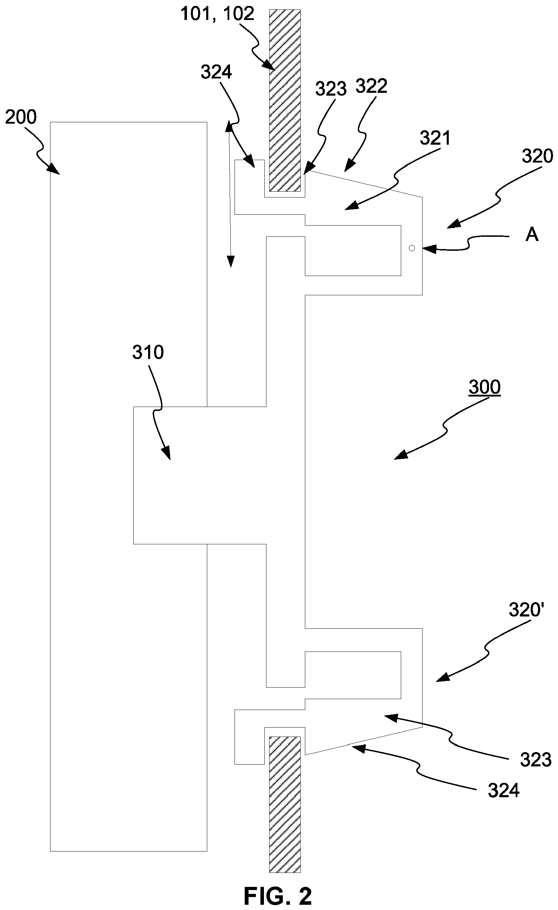

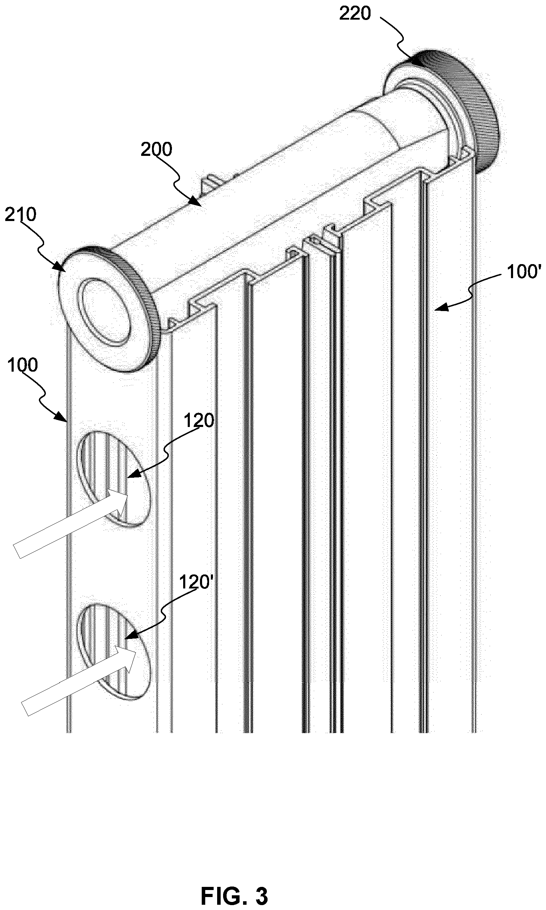

The exhibition stand profile 100 is discussed first below. Exhibition stand profile 100 is a profile that is configured for construction of an exhibition stand frame (shown). Such exhibition stand frames are used as promotional stands, for instance at trade fairs, exhibitions, indoor and/or outdoor events. The exhibition stand profile 100 is also shown in figures 2 and 3, inter alia. The exhibition stand profile 100 has a first side wall 101, a second side wall 102 and at least one third side wall 103. As shown in figure 1, the first side wall 101 and the second side wall 102 are located opposite each other. The first and second side walls 101, 102 are preferably substantially parallel to each other. The first side wall 101 and the second side wall are preferably substantially flat walls. It is noted that an indentation or recess can be made in the first or the second side wall.

The third side wall 103 forms a connection between the first side wall 101 and the second side wall 102. The third side wall 103 preferably extends in substantially perpendicular direction relative to the first and second side wall 101, 102. A fourth side wall 104 can also be provided. The fourth side wall 104 also forms a connection between the first side wall and the second side wall. A rectangular profile is realized in this way. The third and fourth side wall can form slots or grooves for attachment of further elements, a cloth can for instance be secured in a groove or a velcro strip can be secured in a slot. Exhibition stand profile 100 is further provided with a first passage 120 extending through the exhibition stand profile 100. The passage 120 is illustrated in figure 1 by the broken line. Passage 120 extends from a first opening 121 in the first side wall 101 to a second opening 122 in the second side wall 102. A plurality of passages can be provided in one exhibition stand profile, as shown in figure 3. The plurality of passages are distributed as seen in a longitudinal direction of exhibition stand profile 100. The plurality of passages 100 are preferably located at an equal centre-to-centre distance from each other.

Passage 120 is provided for placing a connecting element 200 therethrough, as shown in figure 3, in order to connect the exhibition stand profile 100 to another exhibition stand profile 100' when constructing a stand. A connecting element need not necessarily be arranged through each passage of the plurality of passages.

The connecting element 200 shown schematically in figure 1 is further also shown schematically in figure 2, and in perspective view in figure 3. In the following description of the connecting element reference is correspondingly made to figures 1, 2 and 3 for the purpose of elucidating features of the connecting element 200. Connecting element 200 is configured to be arranged, in a connecting position, through the passage 120 of the exhibition stand profile 100 and a further exhibition stand profile 100'. The connecting position is shown in figure 3. Figure 3 shows that by arranging connecting element 200 through the passage 120 of the exhibition stand profile 100 and a further exhibition stand profile 100' two exhibition stand profiles 100, 100' are connected to each other as shown in figure 3. In figure 3 the first exhibition stand profile 100 and the further exhibition stand profile 100' are placed against each other with respectively one of their first and second side walls, more specifically, the first and the further exhibition stand profile 100, 100' are arranged with their respective second side walls against each other.

As shown in figure 3, connecting element 200 comprises at a first outer end a first flange 210 and at a second outer end a second flange 220. The second flange 220 is attached releasably to the connecting element 200. This enables second flange 220 to be released from the connecting element 200 before connecting element 200 is arranged with the second outer end through the passage 120 of the two exhibition stand profiles 100, 100'. From the moment that the connecting element 200 has then been arranged through the passages 120 the second flange 220 can be attached to connecting element 200 again, so that the two exhibition stand profiles 100, 100' are clamped together between the flanges 210, 220 of connecting element 200. In another embodiment (not shown) of the connecting element the second outer end can also be provided with a screw thread which engages in a corresponding attachment channel or attachment opening, for instance to connect the exhibition stand profile to an LED tile. Such an alternative embodiment also has an elongate base body which can extend through at least one exhibition stand profile. The connecting element can be coupled via the holder to the exhibition stand profile 100 in both embodiments.

Figure 1 shows the connecting element in a position where the connecting element is connected via a holder 300 to the exhibition stand profile 100. The position shown in figure 1 is also referred to as the transport position or the coupled position.

Holder 300 is elucidated with reference to figures 1 and 2, with figure 1 showing a top view of a cross-section of an assembly of the exhibition stand profile 100, connecting element 200 and holder 300. Figure 1 shows a side view of a cross-section of an assembly of the exhibition stand profile 100, connecting element 200 and an exemplary embodiment of holder 300. Holder 300 comprises a holder element 310 and a coupling element 320. Coupling element 320 is configured to couple the holder 300 to the exhibition stand profile 100 and the holder element 310 is provided to hold the connecting element so that connecting element 200 is transportable together with the exhibition stand profile 100. By providing a holder 300 which is connectable to an exhibition stand frame 100 on one side and is configured to hold connecting element 200 on the other a storage space is always available for and typically within direct reach of connecting element 200 during construction and dismantling of the stand, and in this way connecting element 200 will not be lost. Connecting element 200 is further indirectly connected to the exhibition stand profile 100 so that a connecting element 200 is always immediately available during assembly. It will be apparent that more than one connecting element can be mounted on an exhibition stand profile.

Holder 300 is preferably couplable to the exhibition stand profile in removable manner. This allows the holder 300 to be removed after construction of the stand, for instance in order to provide space for further or external exhibition stand elements. The coupling element preferably comprises a first leg 312 and a second leg 313, which are configured to surround the connecting element at least partially in order to hold the connecting element.

As shown in figures 1 and 2, holder 300 is couplable via one of the first opening 121 and the second opening 122 to the exhibition stand profile 100. Holder 300 can be coupled on both the first profile side 101 and the second profile side 102 via respectively the first and the second opening 121, 122. In order to couple holder 300 to the exhibition stand profile the coupling element 310 comprises a first tongue 311 which is configured to extend in the coupled state through the first opening 121 or the second opening 122. Figures 1 and 2 thus show that the holder is arranged against the first side wall 101 or the second side wall and the tongue 311 extends through the opening 121 and into a cavity of the exhibition stand profile 100, and then extends over the rear side of first side wall 101 at the position of the inner side of exhibition stand profile 100. In this way holder 300 clamps against a front side of the first side wall 101 and against a rear side of the first side wall 101 in order to couple the holder to the exhibition stand profile 100. As is shown more specifically in figure 2, in assembled state the tongue extends over the side edge of the first or the second opening which is formed in one of the first or second side wall 101, 102. In this way holder 300 is prevented from being able to fall out of the opening again, because the tongue extends over the side edge the tongue strikes against the side wall and a movement directed outward relative to the passage is prevented.

In figure 2, the first tongue is reference to with reference number 321. The first tongue 321 is preferably a resilient tongue. The first tongue 321 further comprises a guide part 322 which is configured to make the first tongue spring inward during arranging of the holder. Such a tongue allows for both a smooth and a rapid mounting of the holder onto the exhibition stand profile 100. When the holder is being arranged in the first or the second opening of the exhibition stand profile, the resilient tongue will first spring inward until the tongue is able to extend behind the side wall, at which time the resilient tongue springs back outward and secures the holder 300 between a stop 323 and the guide part 322. The guide part 322 preferably runs partially upward, as seen in a direction opposite to the insertion direction, i.e. guide part 322 preferably has an oblique guide surface. In this way the resilient tongue is pressed inward gradually during arranging of the holder 300 in the opening, and holder 300 can be mounted smoothly.

The first tongue 320 is preferably formed to be able to spring inward and outward around an axis A which lies substantially parallel to the first or second side wall. More preferably, the first tongue 320 comprises an actuator element 324 which is provided at an outer end of tongue 320 and, in the coupled state, is located on an outer side of first side wall 101 or second side wall 102 so that, by moving the actuator element 324, the first tongue can spring inward in order to enable holder 300 to be uncoupled. In this way the disassembly can also take place in simple manner by moving the resilient tongue inward or outward for removal of the holder. Because the resilient tongue can bend out in both inward and outward direction, the holder can be recovered in simple manner.

As shown in figure 2, holder 300 further preferably comprises a second tongue 320', which second tongue 320' is arranged on a side of the holder lying opposite the first tongue and is configured to extend through at least one of the first opening, the second opening and a further opening and to extend on an inner side of the first side wall or second side wall. Providing two tongues improves the mutual coupling between the holder and the exhibition stand profile. The first tongue 320 and second tongue 320' need not necessarily extend through the same opening in the side wall. The first tongue can thus be arranged in a first opening 120 and the second tongue can thus be arranged in a second opening 120', as shown with two arrows in figure 3 by way of illustration. When the two tongues are provided in one opening, a distance between the first tongue and the second tongue preferably corresponds substantially with a diameter of the first opening or the second opening. The two tongues thus engage mutually opposite segments of the peripheral edge of the opening so that the holder is coupled to the exhibition stand profile in improved manner.

In order to further improve the connection between holder 300 and the side wall the first and second tongue can be arranged in different openings. These openings lie at a centre-to-centre distance from each other, as shown in figure 3. A distance between the first tongue and the second tongue preferably corresponds here with a sum of the centre-to-centre distance and a diameter of one of the first and the second opening. In this way a larger contact surface is created between the holder and the side wall between the two tongues, enabling the holder to hold the coupling element on the exhibition stand profile in more robust manner.

The skilled person will appreciate on the basis of the above description that the invention can be embodied in different ways and on the basis of different principles. The invention is not limited here to the above described embodiments. The above described embodiments and the figures are purely illustrative and serve only to increase understanding of the invention. The invention will not therefore be limited to the embodiments described herein, but is defined in the claims.

## Claims

1. A holder (300) for use in an assembly with an exhibition stand profile and a connecting element, wherein the holder comprises a holder element (310) and a coupling element (320), wherein the coupling element (320) is configured to couple the holder to the exhibition stand profile (100) and wherein the holder element (310) is provided to hold a connecting element (200), which is configured to connect two exhibition stand profiles to each other, so that the connecting element is transportable together with the exhibition stand profile.

2. The holder according to the foregoing claim, wherein the holder (300) is couplable to the exhibition stand profile (100) in removable manner.

3. The holder according to any one of the foregoing claims, wherein the holder (300) is couplable to the exhibition stand profile (100) via one of a first opening (121) and a second opening (122) and the coupling element (320) comprises a first tongue (321) which is configured to extend in the coupled state through the first opening (121) or the second opening (122) and to extend on an inner side of a first side wall (101) or second side wall (102) of the exhibition stand profile in order to couple the holder (300) to the exhibition stand profile.

4. The holder according to the foregoing claim, wherein the first tongue (321) is a resilient tongue and comprises a guide part (322) which is configured to make the first tongue spring inward during arranging of the holder.

5. The holder according to any one of the foregoing claims, wherein the holder (300) further comprises a second tongue (323), which second tongue is arranged on a side of the holder lying opposite the first tongue and is configured to extend through at least one of the first opening (121), the second opening (122) and a further opening (121') and to extend on an inner side of the first side wall (101) or second side wall (102).

6. The holder according to the foregoing claim, wherein a distance between the first tongue and the second tongue corresponds with a diameter of the first opening or the second opening.

7. The holder according to any one of the foregoing claims, wherein the exhibition stand profile (100) is provided with a plurality of passages (120) extending through the exhibition stand profile (100) from respectively a first opening (121) in the first side wall (101) to a second opening (122) in the second side wall (102), wherein the plurality of passages are provided at a centre-to-centre distance from each other.

8. The holder according to the foregoing claim, wherein a distance between the first tongue and the second tongue corresponds with a sum of a centre-to-centre distance between two openings of the exhibition stand profile and a diameter of one of the first and the second opening.

9. The holder according to any one of the foregoing claims 5-8, wherein the first tongue and/or the second tongue are formed to be able to spring inward and outward around an axis (A) which lies substantially parallel to the first or second side wall.

10. The holder according to the foregoing claim, wherein the first tongue and/or the second tongue comprises an actuator element (330) which is provided at an outer end of the tongue and, in the coupled state, is located on an outer side of the first side wall or the second side wall so that, by moving the actuator element, the first tongue and/or the second tongue can spring inward in order to enable the holder to be uncoupled.

11. The holder according to any one of the foregoing claims, wherein the coupling element comprises a first leg and a second leg, which are configured to surround the connecting element at least partially in order to hold the connecting element.

12. An assembly of an exhibition stand profile (100), a connecting element (200) and a holder (300) according to any one of the foregoing claims,
wherein the exhibition stand profile (100) is a profile configured for construction of an exhibition stand frame and having a first side wall (101), a second side wall (102) and a third side wall (103), wherein the first side wall (101) and the second side wall (102) lie opposite each other, and the third side wall (103) forms a connection between the first side wall (101) and the second side wall (102), wherein the exhibition stand profile (100) is provided with a first passage (120) extending through the exhibition stand profile (100) from a first opening (121) in the first side wall (101) to a second opening (122) in the second side wall (102);
wherein the connecting element (200) is configured to, in a connecting position, be arranged through the passage of at least one of the exhibition stand profile (100) and/or a further exhibition stand profile (100') for the purpose of mutually connecting the exhibition stand profile (100) and the further exhibition stand profile (100') when the exhibition stand profile (100) and the further exhibition stand profile (100') are placed with respectively one of their first and second side walls against each other.
